# EUROPÄISCHE PATENTSCHRIFT

(11) **EP 4 428 048 B1**
(45) Veröffentlichungstag und Bekanntmachung des Hinweises auf die Patenterteilung: **09.09.2026**
(21) Anmeldenummer: 24150287.1
(22) Anmeldetag: 04.01.2024
(51) Int. Cl.: B65D 1/02, B65D 39/00, B65D 65/46

(54) **FASERN UMFASSENDER BEHÄLTER UMFASSEND EINEN FASERN UMFASSENDEN BEHÄLTERKÖRPER UND EINEN AM BEHÄLTERKÖRPER ANGEORDNETEN FASERN UMFASSENDEN KLAPPVERSCHLUSS, UND FASERN UMFASSENDEN KLAPPVERSCHLUSS**
CONTAINER COMPRISING FIBRES, COMPRISING A CONTAINER BODY COMPRISING FIBRES AND A FLIP CLOSURE COMPRISING FIBRES ON THE CONTAINER BODY, AND A FLIP CLOSURE COMPRISING FIBRES
RÉCIPIENT COMPRENANT DES FIBRES COMPRENANT UN CORPS DE RÉCIPIENT COMPRENANT DES FIBRES ET UNE FERMETURE À RABAT COMPRENANT DES FIBRES DISPOSÉES SUR LE CORPS DE RÉCIPIENT, ET FERMETURE À RABAT COMPRENANT DES FIBRES

(30) Priorität: 07.03.2023 DE 102023105573
(43) Veröffentlichungstag der Anmeldung: 11.09.2024
(73) Patentinhaber: Krones AG, 93073 Neutraubling (DE)
(72) Erfinder: SENN, Konrad, 93073 Neutraubling (DE); ZACHARIAS, Joerg, 93073 Neutraubling (DE); LAPPE, Ulrich, 93073 Neutraubling (DE)
(74) Vertreter: Grünecker Patent- und Rechtsanwälte PartG mbB

(56) Entgegenhaltungen:
- CH-A- 188 589
- CN-A- 109 891 026
- DE-C- 79 639
- GB-A- 191 423 185
- SE-A1- 1 850 919
- US-A1- 2011 042 342
- US-A1- 2021 130 030
- US-A1- 2021 161 259
- US-A1- 2021 393 895
- US-A1- 2022 041 340
- US-A1- 2022 153 483

## Beschreibung

Die Erfindung betrifft einen Fasern umfassenden Behälter umfassend einen Fasern umfassenden Behälterkörper und einen am Behälterkörper angeordneten Fasern umfassenden Klappverschluss sowie einen Fasern umfassenden Klappverschluss, wobei die Fasern natürlichen Ursprungs sind, gemäß den unabhängigen Ansprüchen.

### Stand der Technik

Es ist bekannt, Fasern umfassende Behälter mit einem Kunststoffgewinde und Kunststoffdeckeln auszustatten, um eine Wiederverschließbarkeit eines solchen Behälters gewährleisten zu können. Eine Wiederverschließbarkeit von Behältern kann insbesondere bei Füllmengen von mehr als 200 ml wünschenswert sein, da diese Menge im Allgemeinen nicht in einem Zug ausgetrunken wird. Aufgrund der unterschiedlichen Materialien ist der Behälter nicht kompostierbar und auch nur schwer recyclebar.

US 2021/130030 A1 offenbart einen Behälter mit einer Behälterwand, die einen Behälterinnenraum teilweise umgibt und eine Behälteröffnung umfasst. In einem Verfahren zum Befüllen und Verschließen kann der Behälter mit einem Verschluss verschlossen werden. Der Verschluss kann eine Folie sein. Ein Verbinden des Verschlusses mit dem Behälter kann durch Verschrauben, Abdichten oder auch Verpressen erfolgen. Ein Verschluss kann einen Deckel umfassen, beispielsweise einen Schraubdeckel oder einen Kronkorken.

CH 188 589 A offenbart einen Bierflaschenverschluss mit einem am Flaschenhals angelenkten Zugbügel, einem Spannbügel und einem am Zugbügel angeordneten, mit einem Gummidichtungsring versehenen Verschlussstopfen, der aus Fiber bestehen kann.

CN 109 891 026 A offenbart ein Verfahren zum Herstellen eines Behälterverschlusses und den Behälterverschluss aus Pflanzenfaserzellstoff mit einem Behälterabschnitt aus Pflanzenfaserzellstoff, der eine verjüngte äußere Kontaktfläche und ein offenes Ende aufweist, das der Öffnung eines Behälters aus Pflanzenfaserzellstoff entspricht. Der Behälterverschluss umfasst weiter einen Kappenabschnitt aus Pflanzenfaserzellstoff mit einem Hohlkörper mit einem offenen und einem geschlossenen Ende, wobei das offene Ende abdichtend mit dem Behälterabschnitt in Eingriff gebracht werden kann. Der Hohlkörper weist eine verjüngte innere Kontaktfläche auf, die abdichtend an der äußeren Kontaktfläche des Behälterabschnitts angebracht werden kann, wodurch der Behälter aus Pflanzenfaserzellstoff abgedichtet wird.

SE 1 850 919 A1 offenbart ein Verfahren zur Herstellung einer biologisch abbaubaren Einwegverpackung, die einen ersten Behälterteil mit einer ersten Öffnung und einen zweiten darauf aufsetzbaren zweiten Behälterteil umfasst sowie ein Behälterverschlussteil, das eine zweite Öffnung des zweiten Behälterteils verschließen kann. Das Behälterverschlussteil kann ein Deckel, eine Kappe, ein Stopfen, oder ein Hahn sein.

### Aufgabe

Die Aufgabe der Erfindung ist es, einen Fasern umfassenden Behälter umfassend einen Fasern umfassenden Behälterkörper und einen am Behälterkörper angeordneten Fasern umfassenden Klappverschluss sowie einen Fasern umfassende Klappverschluss zur Verfügung zu stellen, die eine Verschließbarkeit und gegebenenfalls eine Wiederverschließbarkeit eines Fasern umfassenden Behälters ohne das Vorsehen eines Gewindes ermöglichen können.

### Lösung

Die Aufgabe wird gelöst durch den Fasern umfassenden Behälter umfassend einen Fasern umfassenden Behälterkörper und einen am Behälterkörper angeordneten Fasern umfassenden Klappverschluss sowie den Fasern umfassenden Klappverschluss gemäß den unabhängigen Ansprüchen. Weitere Ausführungsformen sind in den Unteransprüchen offenbart.

Der erfindungsgemäße Fasern umfassender Behälter umfasst einen Fasern umfassenden Behälterkörper und einen am Behälterkörper angeordneten Fasern umfassenden Klappverschluss. Der Behälterkörper umfasst einen Halsbereich und eine Mündungsöffnung. Der Klappverschluss umfasst einen den Halsbereich umfänglich umgebenden Ring und einen Verschlusskörper, der ausgebildet ist, in einer Verschlussposition des Klappverschlusses die Mündungsöffnung zu verschließen. Der Ring und der Verschlusskörper sind mittels zweier Bügel verbunden. Die Fasern sind natürlichen Ursprungs.

Da der Behälterkörper und der Klappverschluss Fasern umfassen, kann der Behälter kompostierbar und/oder biologisch abbaubar sein.

Die Kontur des Behälterkörpers kann vergleichsweise einfach ausgebildet werden, da das Vorsehen eines Gewindes, beispielsweise zum Auf- und Abschrauben eines Deckels, nicht erforderlich ist.

Für ein Befestigen des Klappverschlusses am Behälterkörper kann es ausreichend sein, einen ausreichend stabilen Halsbereich vorzusehen.

Der Ring kann flach am Halsbereich des Behälterkörpers anliegen, wodurch einwirkende Kräfte besser und gleichmäßiger auf den Halsbereich verteilt werden können.

Die Fasern können Lignin, Bananenblätter und/oder Chinin umfassen. Die Fasern können beispielsweise Zellulosefasern, Fasern von Nadelhölzern, Blattgehölzen und/oder Platanen und/oder Gräsern, Schilf und/oder Bambus oder dergleichen umfassen. Die Fasern können Seidenfäden, Spinnenfäden, Algen, natürliche Fasern (wie Donau-Silphie-Fasern, Hanf, Mais, Baumwolle), Bananenschalen, Orangenschalen, Gras, Stroh, Kartoffelstärke oder aufbereiteten Kuhdung umfassen. Auch können Zellstofffasern vorgesehen sein, die einem Prozess entstammen, durch den sie künstlich gezüchtet wurden. Diese alternativen Materialien können bei Materialengpässen von Holz als Grundstoff für eine fluide Masse mit Fasern, den Grundstoff vollständig oder teilweise ersetzen.

Die Fasern können Fasermischungen aus holzfremden Material, beispielsweise Baumwolle, Hanf, und/oder Textilfasern umfassen.

Beispielsweise können die Fasern Viskosefasern umfassen. Eine Viskosefaser ist eine künstliche Faser aus regenerierter Zellulose, wobei die Viskosefasern als Ausgangsbasis 100% Zellulose haben, die in einem mehrstufigen Verfahren behandelt wird. Die Viskosefasern können eine flache oder kabelförmige Struktur, eine trilobale Form oder eine doppelt trilobale Struktur umfassen. Die Fasern können eine flächige oder hohle Struktur oder eine geriffelte oder raue äußere Oberfläche umfassen.

Es können auch verschiedenartige Fasern in Kombination verwendet werden. Beispielsweise können Fasern mit unterschiedlichen äußeren Oberflächen und/oder Formen und/oder hohler Struktur und/oder flächiger Struktur und/oder aus verschiedenen Materialien kombiniert werden. Durch den natürlichen Ursprung der Fasern können diese biologisch abbaubar sein. Zudem sind sie nachhaltig und nachwachsend.

Die Fasern können in einer Pulpe verwendet werden. Die Pulpe kann eine Mischung aus Wasser, beispielsweise mit Additiven, und Fasern sein oder umfassen.

Der Behälterkörper kann eine Flasche sein.

Das Ausformen des Fasern umfassenden Behälterkörpers unter Verwendung der faserhaltigen Pulpe kann in einer Form erfolgen, die eine Negativform einer Außenkontur des herzustellenden Behälterkörpers darstellen kann, oder mittels eine Spritzgussverfahrens.

Zum Ausformen des Fasern umfassenden Behälterkörpers kann eine erste faserhaltige Pulpe verwendet werden. Zum Ausformen des Rings kann eine zweite faserhaltige Pulpe verwendet werden. Zum Ausformen des Verschlusskörpers kann eine dritte faserhaltige Pulpe verwendet werden. Zum Ausformen der beiden Bügel kann eine vierte faserhaltige Pulpe verwendet werden.

Die erste, zweite, dritte und vierte faserhaltige Pulpe können alle verschieden sein, oder zwei oder drei oder alle faserhaltigen Pulpes können gleich sein.

Der Ring kann eine Breite von 3 Millimeter bis 12 Millimeter aufweisen. Je breiter der Ring ist, umso besser und gleichmäßiger können Kräfte auf den Halsbereich verteilt werden.

Der Ring kann eine Dicke von 0,1 Millimeter bis 4 Millimeter aufweisen. Die Dicke kann beispielsweise abhängig vom Material des Rings sein.

Der Ring kann ein faserhaltiges Geflecht umfassen.

Der Ring kann Karton und/oder eine faserhaltige Schnur, beispielsweise Hanfschnur, umfassen.

Der Ring kann ein biologisch abbaubares und/oder recyclebares Material umfassen.

Am Verschlusskörper kann eine Dichtung angeordnet sein, die in der Verschlussposition zwischen dem Verschlusskörper und der Mündungsöffnung zu liegen kommen kann. Beispielsweise kann die Dichtung ein biologisch abbaubares und/oder recyclebares Material umfassen. Beispielsweise kann das biologisch abbaubare Material Kautschuk und/oder Polyhydroxyalkanoate (PHA) umfassen. Beispielsweise kann die Dichtung Silikonkautschuk oder Silikon umfassen. Beispielsweise kann die Dichtung fest, aber mechanisch lösbar am Verschlusskörper angeordnet sein.

Beispielsweise kann die Dichtung bei einer Zuführung des Behälters zu einem Recyclingstrom von dem Verschlusskörper entfernt werden.

Ein erster Verbindungsbereich von jedem Bügel und Ring kann eine erste Relativbewegung vom Bügel zum Ring zulassen. Die erste Relativbewegung kann ermöglichen, dass ein Verbringen des Klappverschlusses von einer Öffnungs- in eine Verschlussposition oder umgekehrt ohne ein Beschädigen des Klappverschlusses möglich sein kann.

Ein zweiter Verbindungsbereich von jedem Bügel und Verschlusskörper kann eine zweite Relativbewegung zwischen dem Bügel und dem Verschlusskörper zulassen. Die zweite Relativbewegung kann ermöglichen, dass ein Verbringen des Klappverschlusses von einer Öffnungs- in eine Verschlussposition oder umgekehrt ohne ein Beschädigen des Klappverschlusses möglich sein kann.

Jeder Bügel kann ein faserhaltiges Geflecht umfassen. Jeder Bügel kann Karton und/oder eine faserhaltige Schnur, beispielsweise Hanfschnur, umfassen. Jeder Bügel kann ein biologisch abbaubares und/oder recyclebares Material umfassen.

Beispielsweise können bei einem Klappverschluss jeder Bügel und der Ring das gleiche Material umfassen. Alternativ können bei einem Klappverschluss jeder Bügel und der Ring verschiedenes Material umfassen.

Jeder Bügel kann starr ausgebildet sein, wobei beispielsweise der erste Verbindungsbereich und/oder der zweite Verbindungsbereich als Splint ausgeführt sein kann oder eine Bewegungsnut umfassen kann. Starr ausgebildet kann hierbei bedeuten, dass der Bügel einteilig ausgebildet sein kann. Durch das Vorsehen eines Splints oder einer Bewegungsnut kann erreicht werden, dass der Verschlusskörper auf die Mündungsöffnung aufgesetzt (Verschlussposition) oder von dieser entfernt (Öffnungsposition) werden kann, wobei in der Verschlussposition trotzdem ein Verschließen des Behälterkörpers derart erfolgen kann, dass beispielsweise kein Produkt aus dem Behälterkörper auslaufen kann.

Alternativ kann jeder Bügel zweiteilig mit einem Gelenk zwischen einem ersten Bügelteil und einem zweiten Bügelteil ausgebildet sein. Durch das Vorsehen des Gelenks zwischen den beiden Bügelteilen kann der Verschlusskörper auf die Mündungsöffnung aufgesetzt (Verschlussposition) oder von dieser entfernt (Öffnungsposition) werden kann, da sich der erste und der zweite Bügelteil gegeneinander bewegen können. In der Verschlussposition kann ein Verschließen des Behälterkörpers erfolgen, wodurch beispielsweise kein Produkt aus dem Behälterkörper auslaufen kann.

Der Klappverschluss kann weiter eine bewegungseinschränkende Führung für jeden Bügel umfassen.

Beispielsweise kann die Führung am Halsbereich oder an einem Schulterbereich des Fasern umfassenden Behälterkörpers angeordnet sein. Die bewegungseinschränkende Führung kann beispielsweise in der Verschlussposition eine Bewegung des Bügels oder eines Bügelteils einschränken, sodass ein sicherer Sitz des Verschlusskörpers auf der Mündungsöffnung in der Verschlussposition erreicht werden kann.

Jeder der Bügel kann zusätzlich eine Zugvorrichtung umfassen, die dazu ausgebildet sein kann, beim Ausüben einer Zugkraft, wenn der Klappverschluss in einer Verschlussposition angeordnet ist, mindestens einen der Bügel vom Verschlusskörper zu trennen, beispielsweise in dem zweiten Verbindungsbereich, sodass die Mündungsöffnung freigebbar ist. Wird nur einer der Bügel vom Verschlusskörper getrennt, kann der andere Bügel auch nach Verbringen in die Öffnungsposition mit dem Verschlusskörper verbunden bleiben.

Der Halsbereich kann mindestens eine Krempe umfassen. Beispielsweise kann eine erste Krempe in einer Verschlussposition des Klappverschlusses zumindest teilweise in Kontakt mit der Dichtung des Verschlusskörpers sein. Beispielsweise können die erste und/oder eine zweite Krempe als eine Bewegungseinschränkung für den Ring vorgesehen sein.

Die Krempe kann eine ausreichende Stabilität des Halsbereichs des Behälterkörpers bedingen.

Die Krempe kann in der Verschlussposition zumindest teilweise als Gegenstück für den Verschlusskörper dienen, wobei zwischen der Krempe und dem Verschlusskörper die Dichtung zumindest teilweise zu liegen kommt.

Die Krempe kann einen rechteckigen, drei-, fünf-, oder sechseckigen Querschnitt aufweisen, wobei beispielsweise eine oder mehrere Kanten abgerundet ausgebildet sein können. Die Krempe kann einen runden Querschnitt aufweisen.

Zudem ist ein Fasern umfassender Klappverschluss vorgesehen, der an einem Fasern umfassenden Behälterkörper anordenbar ist. Der Klappverschluss umfasst einen Ring, der ausgebildet ist, einen Halsbereich eines Behälterkörpers umfänglich zu umgeben, und einen Verschlusskörper. Der Ring und der Verschlusskörper sind mittels zweier Bügel verbunden. Die Fasern sind natürlichen Ursprungs.

Der Ring kann eine Breite von 3 Millimeter bis 12 Millimeter aufweisen.

Der Ring kann eine Dicke von 0,1 Millimeter bis 4 Millimeter aufweist,

Der Ring kann ein faserhaltiges Geflecht umfassen.

Der Ring kann Karton und/oder eine faserhaltige Schnur, beispielsweise Hanfschnur, umfassen.

Der Ring kann ein biologisch abbaubares und/oder recyclebares Material umfassen.

Am Verschlusskörper kann eine Dichtung angeordnet sein. Beispielsweise kann die Dichtung ein biologisch abbaubares und/oder recyclebares Material umfassen, beispielsweise Kautschuk und/oder Polyhydroxyalkanoate (PHA). Die Dichtung kann beispielsweise Silikonkautschuk oder Silikon umfassen. Beispielsweise kann die Dichtung fest, aber mechanisch lösbar am Verschlusskörper angeordnet sein.

Ein erster Verbindungsbereich von jedem Bügel und Ring kann eine erste Relativbewegung vom Bügel zum Ring zulassen.

Ein zweiter Verbindungsbereich von jedem Bügel und Verschlusskörper kann eine zweite Relativbewegung zwischen dem Bügel und dem Verschlusskörper zulassen.

Jeder Bügel kann ein faserhaltiges Geflecht umfassen. Jeder Bügel kann Karton und/oder eine faserhaltige Schnur, beispielsweise Hanfschnur, umfassen. Jeder Bügel kann ein biologisch abbaubares und/oder recyclebares Material umfassen.

Beispielsweise können bei einem Klappverschluss jeder Bügel und der Ring das gleiche Material umfassen. Alternativ können bei einem Klappverschluss jeder Bügel und der Ring verschiedenes Material umfassen.

Der Klappverschluss kann weiter eine bewegungseinschränkende Führung für jeden Bügel umfassen, wobei beispielsweise die Führung am Halsbereich oder an einem Schulterbereich des Fasern umfassenden Behälterkörpers angeordnet sein kann.

Jeder Bügel kann starr ausgebildet sein, wobei beispielsweise der erste Verbindungsbereich und/oder der zweite Verbindungsbereich als Splint ausgeführt sein kann oder eine Bewegungsnut umfassen kann.

Alternativ kann jeder Bügel zweiteilig mit einem Gelenk zwischen einem ersten Bügelteil und einem zweiten Bügelteil ausgebildet sein.

### Kurze Figurenbeschreibung

Die beigefügten Figuren stellen beispielhaft zum besseren Verständnis und zur Veranschaulichung Aspekte und/oder Ausführungsbeispiele der Erfindung dar. Es zeigt:
Figur 1A eine erste Ausführungsform eines Fasern umfassenden Behälters mit einem Fasern umfassenden Behälterkörper und mit einem Fasern umfassenden Klappverschluss, der sich in einer Öffnungsposition befindet,
Figur 1B die erste Ausführungsform, wobei sich der Klappverschluss in der Verschlussposition befindet,
Figur 2A eine zweite Ausführungsform eines Fasern umfassenden Behälters mit einem Fasern umfassenden Behälterkörper und mit einem Fasern umfassenden Klappverschluss, der sich in einer Öffnungsposition befindet,
Figur 2B eine dritte Ausführungsform eines Fasern umfassenden Behälters mit einem Fasern umfassenden Behälterkörper und mit einem Fasern umfassenden Klappverschluss, der sich in der Verschlussposition befindet,
Figur 2C eine vierte Ausführungsform eines Fasern umfassenden Behälters mit einem Fasern umfassenden Behälterkörper und mit einem Fasern umfassenden Klappverschluss, der sich in der Verschlussposition befindet,
Figur 3A eine fünfte Ausführungsform eines Fasern umfassenden Behälters mit einem Fasern umfassenden Behälterkörper und mit einem Fasern umfassenden Klappverschluss, der sich in der Verschlussposition,
Figur 3B die fünfte Ausführungsform, wobei sich der Klappverschluss in der Öffnungsposition befindet,
Figur 3C eine sechste Ausführungsform eines Fasern umfassenden Behälters mit einem Fasern umfassenden Behälterkörper und mit einem Fasern umfassenden Klappverschluss, der sich in der Öffnungsposition befindet,
Figur 4A eine erste Ausführungsform des Rings,
Figur 4B eine zweite Ausführungsform des Rings,
Figur 4C eine dritte Ausführungsform des Rings,
Figur 5A eine erste Ausführungsform einer Krempe,
Figur 5B eine zweite Ausführungsform einer Krempe,
Figur 5C eine dritte Ausführungsform einer Krempe,
Figur 5D eine vierte Ausführungsform einer Krempe,
Figur 5E eine fünfte Ausführungsform einer Krempe,
Figur 6A eine sechste Ausführungsform einer Krempe,
Figur 6B eine siebte Ausführungsform einer Krempe,
Figur 6C eine achte Ausführungsform einer Krempe und
Figur 6D eine neunte Ausführungsform einer Krempe.

### Ausführliche Figurenbeschreibung

Hinsichtlich der im Folgenden genannten Fasern des Behälters, des Behälterköpers und/oder des Klappverschlusses kann das bereits weiter oben erwähnte gelten.

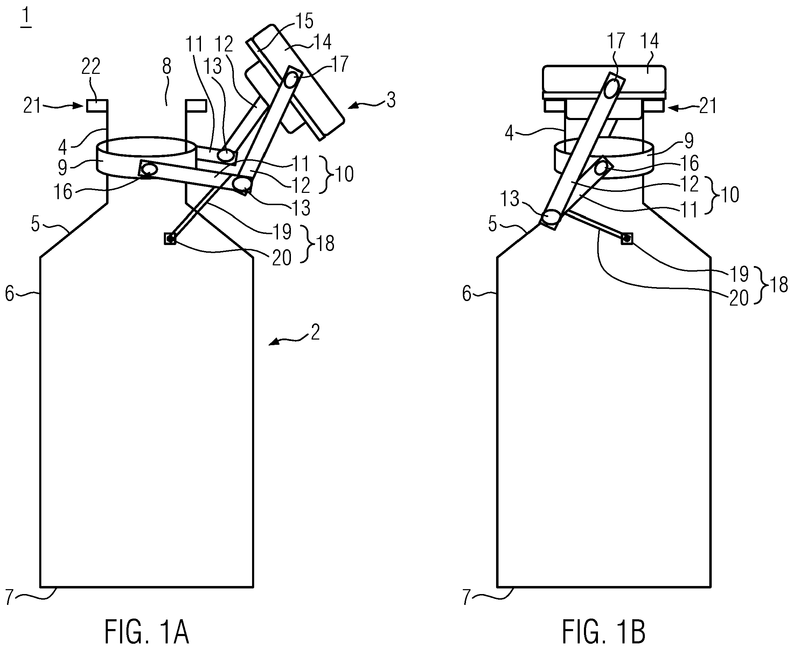

Die Figur 1A zeigt eine erste Ausführungsform eines Fasern umfassenden Behälters 1 mit einem Fasern umfassenden Behälterkörper 2 und mit einem Fasern umfassenden Klappverschluss 3, der sich in einer Öffnungsposition befindet. Der Behälterkörper 2 umfasst einen Halsbereich 4, einen Schulterbereich 5, einen Körperbereich 6 und einen Bodenbereich 7. Eine Mündungsöffnung 8 ist benachbart zum Halsbereich 4 vorgesehen.

Der Klappverschluss 3 umfasst einen Ring 9, der den Halsbereich 4 umfänglich umgibt, zwei Bügel 10, die jeweils einen erste Bügelteil 11 und einen zweiten Bügelteil 12 umfassen, und einen Verschlusskörper 14 mit einer Dichtung 15. Ein erster Verbindungsbereich 16 vom ersten Bügelteil 11 und dem Ring 9 lässt eine erste Relativbewegung vom ersten Bügelteil 11 zum Ring 9 zu. Der ersten Bügelteil 11 und der zweite Bügelteil 12 mittels eines Gelenks 13 beweglich miteinander verbunden. Ein zweiter Verbindungsbereich 17 vom zweiten Bügelteil 12 und dem Verschlusskörper 14 lässt eine zweite Relativbewegung zwischen dem zweiten Bügelteil 12 und dem Verschlusskörper 14 zu.

Der erste Verbindungsbereich 16 des einen ersten Bügelteils 11 mit dem Ring 9 und der erste Verbindungsbereich 16 des anderen ersten Bügelteils 11 mit dem Ring 9 sind hierbei an einander, diametral gegenüberliegenden Positionen des Rings 9 angeordnet.

Der zweite Verbindungsbereich 17 des einen zweiten Bügelteils 12 mit dem Verschlusskörper 14 und der zweite Verbindungsbereich 17 des anderen zweiten Bügelteils 12 mit dem Verschlusskörper 14 sind hierbei an einander, diametral gegenüberliegenden Positionen des Verschlusskörpers 14 angeordnet.

Der Klappverschluss 3 umfasst zudem eine bewegungseinschränkende Führung 18 für jeden der Bügel 10. Die bewegungseinschränkende Führung 18 umfasst eine Befestigung 20, die am Schulterbereich 5 des Behälterkörpers 2 angeordnet ist, und ein Führungsmittel 19, wie beispielsweise ein Band oder, das von der Befestigung 20 ausgehend um den ersten Bügelteil 11 verläuft und am ersten Bügelteil 11 beweglich angeordnet ist. Die bewegungseinschränkende Führung 18 ist dafür vorgesehen, eine Bewegung des ersten Bügelteils 11 (und somit des Bügels 10 an sich) einzuschränken, wenn der Klappverschluss 3 in einer Verschlussposition angeordnet ist.

Zudem umfasst der Behälterkörper 2 eine Krempe 21, auf deren oberen Oberfläche 22 in der Verschlussposition des Klappverschlusses 3 die Dichtung 15 zumindest teilweise aufliegen und für eine Abdichtung sorgen kann. Die obere Oberfläche 22 der Krempe 21 schließt dabei mit der Mündungsöffnung 8 des Behälterkörpers 2 ab.

Die Figur 1B zeigt die erste Ausführungsform, wobei sich der Klappverschluss 3 in der Verschlussposition befindet. Durch den Verschlusskörper 14 wird die Mündungsöffnung 8 verschlossen und durch die Dichtung 15, die zumindest teilweise auf der oberen Oberfläche 22 der Krempe 21 aufliegt, abgedichtet.

Die bewegungseinschränkende Führung 18 sorgt in der Verschlussposition des Klappverschlusses 3 dafür, dass die Bewegung des ersten Bügelteils 11 eingeschränkt wird und er sich nicht weiter nach links bewegen kann, was dazu führen könnte, dass der Klappverschluss 3 aus der Verschlussposition in eine Öffnungsposition gelangen könnte und somit der Behälterkörper 2 nicht länger sicher verschlossen wäre.

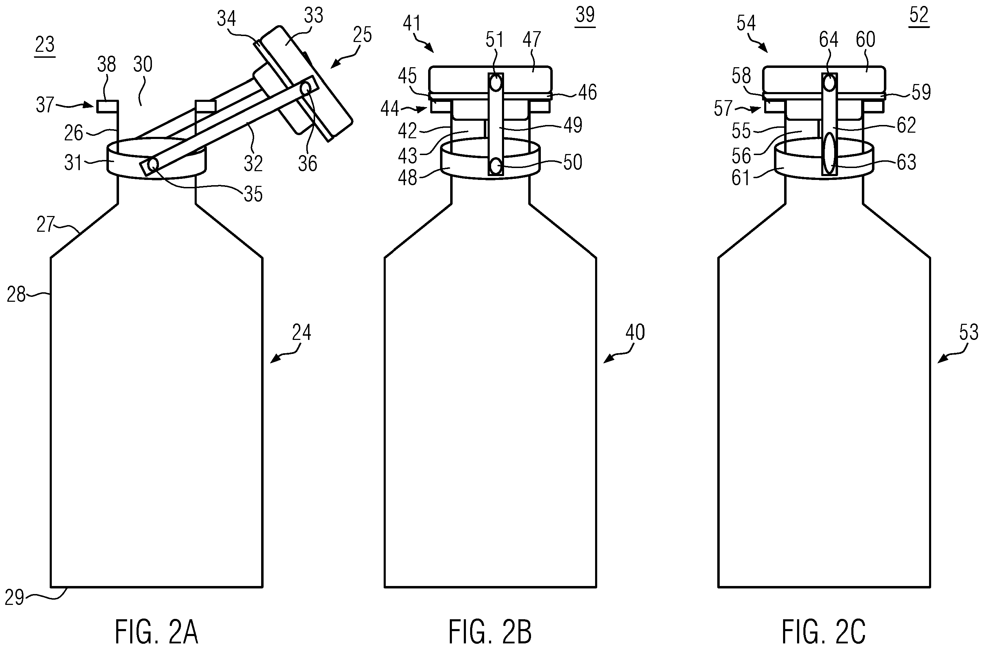

Die Figur 2A zeigt eine zweite Ausführungsform eines Fasern umfassenden Behälters 23 mit einem Fasern umfassenden Behälterkörper 24 und mit einem Fasern umfassenden Klappverschluss 25, der sich in einer Öffnungsposition befindet.

Der Behälterkörper 24 umfasst einen Halsbereich 26, einen Schulterbereich 27, einen Körperbereich 28 und einen Bodenbereich 29. Eine Mündungsöffnung 30 ist benachbart zum Halsbereich 26 vorgesehen.

Der Klappverschluss 25 umfasst einen Ring 31, der den Halsbereich 26 umfänglich umgibt, zwei Bügel 32 und einen Verschlusskörper 33 mit einer Dichtung 34. Ein erster Verbindungsbereich 35 vom Bügel 32 und dem Ring 31 lässt eine erste Relativbewegung vom Bügel 32 zum Ring 31 zu. Ein zweiter Verbindungsbereich 36 vom Bügel 32 und dem Verschlusskörper 33 lässt eine zweite Relativbewegung zwischen dem Bügel 32 und dem Verschlusskörper 33 zu.

Der erste Verbindungsbereich 35 des einen Bügels 32 mit dem Ring 31 und der erste Verbindungsbereich 35 des anderen Bügels 32 mit dem Ring 31 sind hierbei an einander, diametral gegenüberliegenden Positionen des Rings 31 angeordnet.

Der zweite Verbindungsbereich 36 des einen Bügels 32 mit dem Verschlusskörper 33 und der zweite Verbindungsbereich 36 des anderen Bügels 32 mit dem Verschlusskörper 33 sind hierbei an einander, diametral gegenüberliegenden Positionen des Verschlusskörpers 33 angeordnet.

Zudem umfasst der Behälterkörper 24 eine Krempe 37, auf deren oberen Oberfläche 38 in der Verschlussposition des Klappverschlusses 25 die Dichtung 34 zumindest teilweise aufliegen und für eine Abdichtung sorgen kann. Die obere Oberfläche 38 der Krempe 37 schließt dabei mit der Mündungsöffnung 30 des Behälterkörpers 24 ab.

Die Figur 2B zeigt eine dritte Ausführungsform eines Fasern umfassenden Behälters 39 mit einem Fasern umfassenden Behälterkörper 40 und mit einem Fasern umfassenden Klappverschluss 41, der sich in der Verschlussposition befindet.

Der Behälterkörper 40 umfasst unter anderem einen Halsbereich 42 und eine zum Halsbereich 42 benachbart angeordnete Mündungsöffnung 43. Zudem umfasst der Behälterkörper 40 eine Krempe 44 mit einer oberen Oberfläche 45, auf der in der Verschlussposition des Klappverschlusses 41 eine Dichtung 46 eines Verschlusskörpers 47 zumindest teilweise aufliegt und für eine Abdichtung des Behälterkörpers 40 sorgt. Die obere Oberfläche 45 der Krempe 44 schließt dabei mit der Mündungsöffnung 43 des Behälterkörpers 40 ab.

Der Klappverschluss 41 umfasst neben dem Verschlusskörper 47 mit der Dichtung 47 einen Ring 48, der den Halsbereich 42 umfänglich umgibt, und zwei Bügel 49. Ein erster Verbindungsbereich 50 vom Bügel 49 und dem Ring 48 lässt eine erste Relativbewegung vom Bügel 43 zum Ring 48 zu. Der erste Verbindungsbereich 50 ist hierbei als Splint vorgesehen. Ein zweiter Verbindungsbereich 51 vom Bügel 49 und dem Verschlusskörper 47 lässt eine zweite Relativbewegung zwischen dem Bügel 49 und dem Verschlusskörper 47 zu.

Der erste Verbindungsbereich 50 des einen Bügels 49 mit dem Ring 48 und der erste Verbindungsbereich 50 des anderen Bügels 49 mit dem Ring 48 sind hierbei an einander, diametral gegenüberliegenden Positionen des Rings 48 angeordnet.

Der zweite Verbindungsbereich 51 des einen Bügels 49 mit dem Verschlusskörper 47 und der zweite Verbindungsbereich 51 des anderen Bügels 49 mit dem Verschlusskörper 47 sind hierbei an einander, diametral gegenüberliegenden Positionen des Verschlusskörpers 47 angeordnet.

In der dargestellten Verschlussposition verschließt der Verschlusskörper 47 die Mündungsöffnung 43 und die Dichtung 46 dichtet den Behälterkörper 40 zudem ab.

Die Figur 2C zeigt eine vierte Ausführungsform eines Fasern umfassenden Behälters 52 mit einem Fasern umfassenden Behälterkörper 53 und mit einem Fasern umfassenden Klappverschluss 54, der sich in der Verschlussposition befindet.

Der Behälterkörper 53 umfasst unter anderem einen Halsbereich 55 und eine zum Halsbereich 55 benachbart angeordnete Mündungsöffnung 56. Zudem umfasst der Behälterkörper 53 eine Krempe 57 mit einer oberen Oberfläche 58, auf der in der Verschlussposition des Klappverschlusses 54 eine Dichtung 59 eines Verschlusskörpers 60 zumindest teilweise aufliegt und für eine Abdichtung des Behälterkörpers 53 sorgt. Die obere Oberfläche 58 der Krempe 57 schließt dabei mit der Mündungsöffnung 56 des Behälterkörpers 53 ab.

Der Klappverschluss 54 umfasst neben dem Verschlusskörper 60 mit der Dichtung 59 einen Ring 61, der den Halsbereich 55 umfänglich umgibt, und zwei Bügel 62. Ein erster Verbindungsbereich 63 vom Bügel 62 und dem Ring 61 lässt eine erste Relativbewegung vom Bügel 62 zum Ring 61 zu. Der erste Verbindungsbereich 63 ist hierbei als Nut vorgesehen. Ein zweiter Verbindungsbereich 64 vom Bügel 62 und dem Verschlusskörper 60 lässt eine zweite Relativbewegung zwischen dem Bügel 62 und dem Verschlusskörper 60 zu.

Der erste Verbindungsbereich 63 des einen Bügels 62 mit dem Ring 61 und der erste Verbindungsbereich 63 des anderen Bügels 62 mit dem Ring 61 sind hierbei an einander, diametral gegenüberliegenden Positionen des Rings 61 angeordnet.

Der zweite Verbindungsbereich 64 des einen Bügels 62 mit dem Verschlusskörper 60 und der zweite Verbindungsbereich 64 des anderen Bügels 62 mit dem Verschlusskörper 60 sind hierbei an einander, diametral gegenüberliegenden Positionen des Verschlusskörpers 60 angeordnet. In der dargestellten Verschlussposition verschließt der Verschlusskörper 60 die Mündungsöffnung 56 und die Dichtung 59 dichtet den Behälterkörper 53 zudem ab.

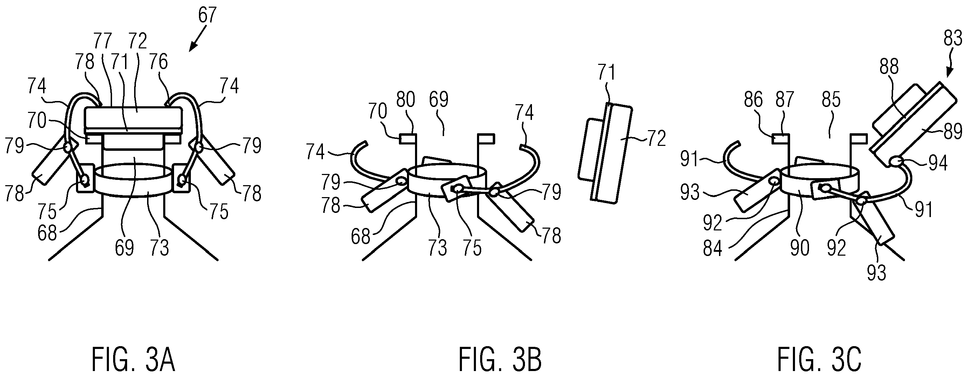

Die Figur 3A zeigt eine fünfte Ausführungsform eines Fasern umfassenden Behälters 65 mit einem Fasern umfassenden Behälterkörper 66 und mit einem Fasern umfassenden Klappverschluss 67, der sich in der Verschlussposition.

Der Behälterkörper 66 umfasst unter anderem einen Halsbereich 68 und eine zum Halsbereich 68 benachbart angeordnete Mündungsöffnung 69. Zudem umfasst der Behälterkörper 66 eine Krempe 70 mit einer oberen Oberfläche, auf der in der gezeigten Verschlussposition eine Dichtung 71 eines Verschlusskörpers 72 zumindest teilweise aufliegt und für eine Abdichtung des Behälterkörpers 66 sorgt.

Der Klappverschluss 67 umfasst neben dem Verschlusskörper 72 mit der Dichtung 71 einen Ring 73, der den Halsbereich 68 umfänglich umgibt, und zwei Bügel 74. Ein erster Verbindungsbereich 75 vom Bügel 74 und dem Ring 73 lässt eine erste Relativbewegung vom Bügel 74 zum Ring 73 zu. Der Bügel 74 und der Verschlusskörper 72 sind in einem zweiten Verbindungsbereich 76 verbunden.

Der erste Verbindungsbereich 75 des einen Bügels 74 mit dem Ring 73 und der erste Verbindungsbereich 75 des anderen Bügels 74 mit dem Ring 73 sind hierbei an einander, diametral gegenüberliegenden Positionen des Rings 73 angeordnet.

Der zweite Verbindungsbereich 76 jedes Bügels 74 ist auf einer oberen Oberfläche 77 des Verschlusskörpers 72 angeordnet.

Jeder der Bügel 74 umfasst zudem eine Zugvorrichtung 78, die dazu ausgebildet ist, beim Ausüben einer Zugkraft, wenn der Klappverschluss 67 in einer Verschlussposition angeordnet ist, die Bügel 74 vom Verschlusskörper 72 zu trennen, sodass die Mündungsöffnung 69 freigebbar ist (und sich der Klappverschluss 67 in einer Öffnungsposition befindet). Die Zugvorrichtung 78 ist mit einem dritten Verbindungsbereich 79 mit dem Bügel 74 verbunden.

In der dargestellten Verschlussposition verschließt der Verschlusskörper 72 die Mündungsöffnung 69 und die Dichtung 71 dichtet den Behälterkörper 66 zudem ab.

Die Figur 3B zeigt die fünfte Ausführungsform, wobei sich der Klappverschluss 67 in der Öffnungsposition befindet. Beide Bügel 74 wurden zur Erreichung der Öffnungsposition durch ausüben einer Zugkraft auf die jeweilige Zugvorrichtung 78, als der Klappverschluss 67 in der Verschlussposition angeordnet war, vom Verschlusskörper 72 getrennt, sodass der Verschlusskörper 72 zusammen mit der Dichtung 71 entfernt werden konnte und die Mündungsöffnung 69 freigegeben ist. Zu erkennen ist nun auch die obere Oberfläche 80 der Krempe 70. Die obere Oberfläche 80 der Krempe 70 schließt dabei mit der Mündungsöffnung 69 des Behälterkörpers 66 ab.

Die Figur 3C zeigt eine sechste Ausführungsform eines Fasern umfassenden Behälters 81 mit einem Fasern umfassenden Behälterkörper 82 und mit einem Fasern umfassenden Klappverschluss 83, der sich in der Öffnungsposition befindet.

Der Behälterkörper 82 umfasst unter anderem einen Halsbereich 84 und eine zum Halsbereich 84 benachbart angeordnete Mündungsöffnung 85. Zudem umfasst der Behälterkörper 82 eine Krempe 86 mit einer oberen Oberfläche 87, auf der in einer Verschlussposition eine Dichtung 88 eines Verschlusskörpers 89 zumindest teilweise aufliegen und für eine Abdichtung des Behälterkörpers 82 sorgen kann.

Der Klappverschluss 83 umfasst neben dem Verschlusskörper 89 mit der Dichtung 88 einen Ring 90, der den Halsbereich 84 umfänglich umgibt, und zwei Bügel 91. Ein erster Verbindungsbereich 92 vom Bügel 91 und dem Ring 90 lässt eine erste Relativbewegung vom Bügel 91 zum Ring 90 zu. Der erste Verbindungsbereich 92 des einen Bügels 91 mit dem Ring 90 und der erste Verbindungsbereich 92 des anderen Bügels 91 mit dem Ring 90 sind hierbei an einander, diametral gegenüberliegenden Positionen des Rings 90 angeordnet.

Jeder der Bügel 91 umfasst zudem eine Zugvorrichtung 93, die dazu ausgebildet ist, beim Ausüben einer Zugkraft, wenn der Klappverschluss 83 in einer Verschlussposition angeordnet ist, einen der Bügel 91 vom Verschlusskörper 89 zu trennen, sodass die Mündungsöffnung 85 freigebbar ist und sich der Klappverschluss 83 in der gezeigten Öffnungsposition befindet. Der andere der beiden Bügel 91 bleibt mit dem Verschlusskörper 89 in einem zweiten Verbindungsbereich 94 verbunden. Die Zugvorrichtung 93 ist mit einem dritten Verbindungsbereich 95 mit dem Bügel 91 verbunden.

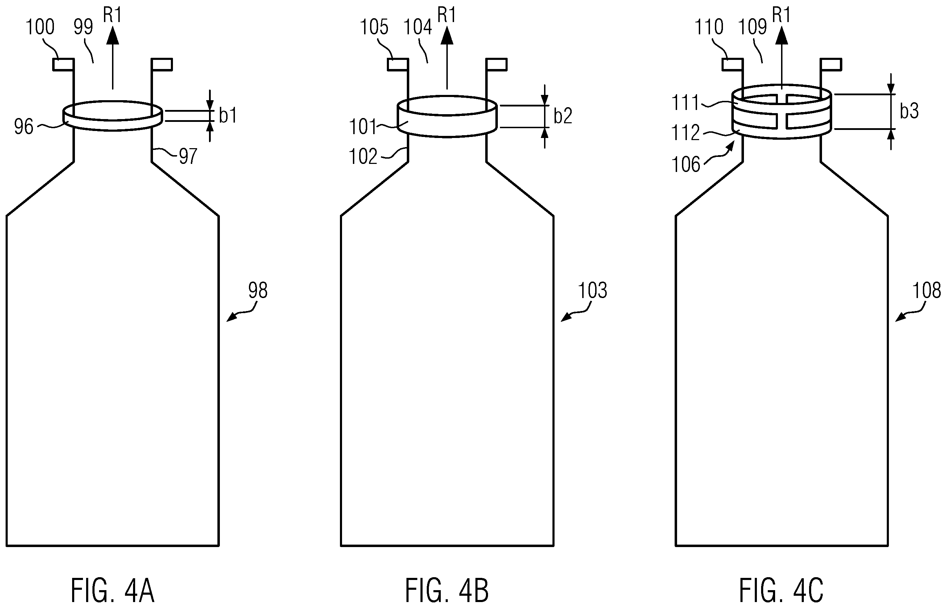

Die Figur 4A zeigt eine erste Ausführungsform des Rings 96. Der Ring 96 umgibt einen Halsbereich 97 eines Fasern umfassenden Behälterkörpers 98 umfänglich. Der Ring 96 weist eine erste Breite b1 auf. Eine Bewegung des Rings 96 in eine Richtung R1 nach parallel zu einer Längsachse des Behälterkörpers 98 nach oben, kann durch eine Krempe 100 des Behälterkörpers 98 unterbunden werden. Eine obere Oberfläche der Krempe 100 schließt dabei mit der Mündungsöffnung 99 des Behälterkörpers 98 ab.

Die Figur 4B zeigt eine zweite Ausführungsform des Rings 101. Der Ring 101 umgibt einen Halsbereich 102 eines Fasern umfassenden Behälterkörpers 103 umfänglich. Der Ring 101 weist eine erste Breite b2 auf. Eine Bewegung des Rings 101 in eine Richtung R1 nach parallel zu einer Längsachse des Behälterkörpers 103 nach oben, kann durch eine Krempe 105 des Behälterkörpers 103 unterbunden werden. Eine obere Oberfläche der Krempe 105 schließt dabei mit der Mündungsöffnung 104 des Behälterkörpers 103 ab.

Die Figur 4C zeigt eine dritte Ausführungsform des Rings 106. Der Ring 106 umgibt einen Halsbereich 107 eines Fasern umfassenden Behälterkörpers 108 umfänglich. Der Ring 106 weist eine erste Breite b3 auf. Eine Bewegung des Rings 106 in eine Richtung R1 nach parallel zu einer Längsachse des Behälterkörpers 108 nach oben, kann durch eine Krempe 110 des Behälterkörpers 108 unterbunden werden. Eine obere Oberfläche der Krempe 110 schließt dabei mit der Mündungsöffnung 109 des Behälterkörpers 108 ab. Der Ring 106 umfasst einen ersten Teilbereich 111 und einen zweiten Teilbereich 112, wobei der erste Teilbereich 111 beispielsweise aus einem festeren Material als der zweite Teilbereich 112 sein kann.

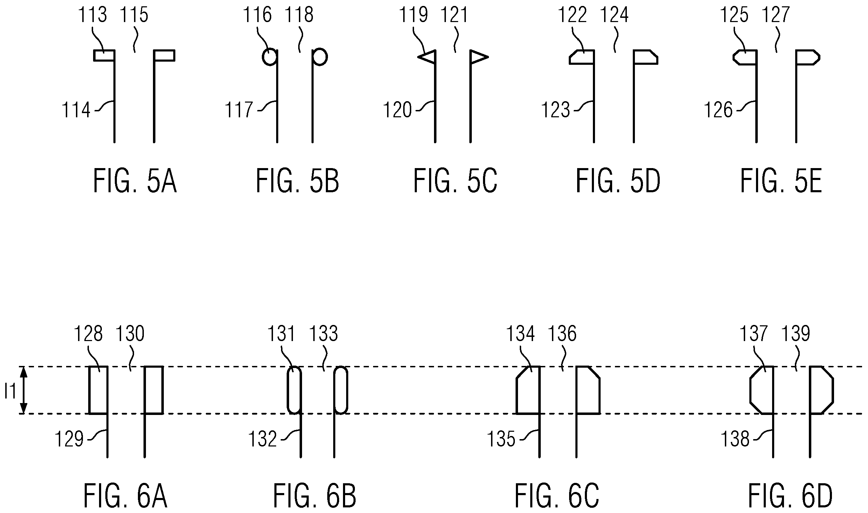

Die Figur 5A zeigt eine erste Ausführungsform einer an einem Fasern umfassenden Behälterkörper vorgesehenen Krempe 113, die zumindest teilweise umlaufend an einem Halsbereich 114 vorgesehen ist. Die Krempe 113 ist radial auskragend vorgesehen und weist einen rechteckigen Querschnitt auf. Eine obere Oberfläche der Krempe 113 schließt dabei mit einer Mündungsöffnung 115 des Behälterkörpers ab.

Die Figur 5B zeigt eine zweite Ausführungsform einer an einem Fasern umfassenden Behälterkörper vorgesehenen Krempe 116, die zumindest teilweise umlaufend an einem Halsbereich 117 des Behälterkörpers vorgesehen ist. Die Krempe 116 ist radial auskragend vorgesehen und weist einen runden Querschnitt auf. Eine obere Kante der Krempe 116 schließt dabei mit einer Mündungsöffnung 118 des Behälterkörpers ab. Als obere Kante kann hierbei ein Kreisring verstanden werden, der durch die oberste Rundung der Krempe 116 gegeben sein kann.

Beispielsweise kann sich der runde Querschnitt der Krempe zumindest teilweise bis in den Halsbereich 117 hineinerstrecken, sodass derjenige Querschnitt der Krempe, der an der Außenseite des Mündungsbereichs beginnt, einem Kreissegment (auch als Kreisabschnitt bezeichnet) mit einer Höhe entsprechen kann, die größer als ein Radius des Kreises sein kann. Die Höhe kann dem 1,5fachen bis 1,8fachen des Radius entsprechen. Die Grenzen des Bereichs können miteingeschlossen sein. Die Höhe kann nicht größer als der doppelte Radius sein.

Die Figur 5C zeigt eine dritte Ausführungsform einer an einem Fasern umfassenden Behälterkörper vorgesehenen Krempe 119, die zumindest teilweise umlaufend an einem Halsbereich 120 des Behälterkörpers vorgesehen ist. Die Krempe 119 ist radial auskragend vorgesehen und weist einen dreieckigen Querschnitt auf. Eine obere Kante der Krempe 119 schließt dabei mit einer Mündungsöffnung 121 des Behälterkörpers ab.

Die Figur 5D zeigt eine vierte Ausführungsform einer an einem Fasern umfassenden Behälterkörper vorgesehenen Krempe 122, die zumindest teilweise umlaufend an einem Halsbereich 123 des Behälterkörpers vorgesehen ist. Die Krempe 122 ist radial auskragend vorgesehen. Die Krempe 122 weist einen fünfeckigen Querschnitt auf, der einem Rechteck mit einer vom Behälterkörper abgewandten, abgeschnittenen Ecke entspricht. Eine obere Oberfläche der Krempe 122 schließt dabei mit einer Mündungsöffnung 124 des Behälterkörpers ab.

Die Figur 5E zeigt eine fünfte Ausführungsform einer an einem Fasern umfassenden Behälterkörper vorgesehenen Krempe 125, die zumindest teilweise umlaufend an einem Halsbereich 126 des Behälterkörpers vorgesehen ist. Die Krempe 125 ist radial auskragend vorgesehen und weist einen sechseckigen Querschnitt auf, der einem Rechteck mit zwei vom Behälterkörper abgewandten, abgeschnittenen Ecken entspricht. Eine obere Oberfläche der Krempe 125 schließt dabei mit einer Mündungsöffnung 127 des Behälterkörpers ab.

Die Figur 6A zeigt eine sechste Ausführungsform einer an einem Fasern umfassenden Behälterkörper vorgesehenen Krempe 128, die zumindest teilweise umlaufend an einem Halsbereich 129 des Behälterkörpers vorgesehen ist. Die Krempe 128 erstreckt sich dabei über eine Länge I1 parallel zu einer Längsachse des Behälterkörpers. Durch diese Ausdehnung der Krempe 128 kann der Halsbereich 129 beispielsweise eine größere Stabilität aufweisen als ein Teil des Halsbereichs 129, in dem keine Krempe vorgesehen ist. Die Krempe 128 ist radial auskragend vorgesehen und weist einen langrechteckigen Querschnitt auf. Eine obere Oberfläche der Krempe 128 schließt dabei mit einer Mündungsöffnung 130 des Behälterkörpers ab.

Die Figur 6B zeigt eine siebte Ausführungsform einer an einem Fasern umfassenden Behälterkörper vorgesehenen Krempe 131, die zumindest teilweise umlaufend an einem Halsbereich 132 des Behälterkörpers vorgesehen ist. Die Krempe 131 erstreckt sich dabei über eine Länge I1 parallel zu einer Längsachse des Behälterkörpers. Durch diese Ausdehnung der Krempe 131 kann der Halsbereich 132 beispielsweise eine größere Stabilität aufweisen als ein Teil des Halsbereichs 132, in dem keine Krempe vorgesehen ist. Die Krempe 131 ist radial auskragend vorgesehen und weist einen langrechteckigen Querschnitt mit abgerundeten Kanten auf. Eine obere Kante der Krempe 131 schließt dabei mit einer Mündungsöffnung 133 des Behälterkörpers ab. Als obere Kante kann hierbei ein Kreisring verstanden werden, der durch die oberste Rundung der Krempe 131 gegeben sein kann.

Die Figur 6C zeigt eine achte Ausführungsform einer an einem Fasern umfassenden Behälterkörper vorgesehenen Krempe 134, die zumindest teilweise umlaufend an einem Halsbereich 135 des Behälterkörpers vorgesehen ist. Die Krempe 134 erstreckt sich dabei über eine Länge I1 parallel zu einer Längsachse des Behälterkörpers. Durch diese Ausdehnung der Krempe 134 kann der Halsbereich 135 beispielsweise eine größere Stabilität aufweisen als ein Teil des Halsbereichs 135, in dem keine Krempe vorgesehen ist. Die Krempe 134 ist radial auskragend vorgesehen. Die Krempe 134 weist einen fünfeckigen Querschnitt auf, der einem Rechteck mit einer vom Behälterkörper abgewandten, abgeschnittenen Ecke entspricht. Eine obere Oberfläche der Krempe 134 schließt dabei mit einer Mündungsöffnung 136 des Behälterkörpers ab.

Die Figur 6D zeigt eine neunte Ausführungsform einer an einem Fasern umfassenden Behälterkörper vorgesehenen Krempe 137, die zumindest teilweise umlaufend an einem Halsbereich 138 des Behälterkörpers vorgesehen ist. Die Krempe 137 erstreckt sich dabei über eine Länge I1 parallel zu einer Längsachse des Behälterkörpers. Durch diese Ausdehnung der Krempe 137 kann der Halsbereich 138 beispielsweise eine größere Stabilität aufweisen als ein Teil des Halsbereichs 138, in dem keine Krempe vorgesehen ist. Die Krempe 137 ist radial auskragend vorgesehen und weist einen sechseckigen Querschnitt auf, der einem Rechteck mit zwei vom Behälterkörper abgewandten, abgeschnittenen Ecken entspricht. Eine obere Oberfläche der Krempe 137 schließt dabei mit einer Mündungsöffnung 139 des Behälterkörpers ab.

## Patentansprüche

1. Fasern umfassender Behälter (1, 23, 39, 52, 65, 81) umfassend einen Fasern umfassenden Behälterkörper,
**gekennzeichnet durch**
einen am Behälterkörper (2, 24, 40, 53, 66, 82, 98, 103, 108) angeordneten Fasern umfassenden Klappverschluss (3, 25, 41, 54, 67, 83),
wobei der Behälterkörper einen Halsbereich (4, 26, 42, 55, 68, 84, 97, 102, 107, 114, 117, 120, 123, 126, 129, 132, 135, 138) und eine Mündungsöffnung (8, 30, 43, 56, 69, 85, 99, 104, 109, 115, 118, 121, 124, 127, 130, 133, 136, 139) umfasst,
wobei der Klappverschluss einen den Halsbereich (4, 26, 42, 55, 68, 84, 97, 102, 107, 114, 117, 120, 123, 126, 129, 132, 135, 138) umfänglich umgebenden Ring (9, 31, 48, 61, 73, 90, 96, 101, 106) und einen Verschlusskörper (14, 33, 47, 60, 72, 89), der ausgebildet ist, in einer Verschlussposition des Klappverschlusses (3, 25, 41, 54, 67, 83) die Mündungsöffnung (8, 30, 43, 56, 69, 85, 99, 104, 109, 115, 118, 121, 124, 127, 130, 133, 136, 139) zu verschließen, umfasst, wobei der Ring und der Verschlusskörper mittels zweier Bügel (10, 32, 49, 62, 74, 91) verbunden sind, wobei die Fasern natürlichen Ursprungs sind.

2. Der Fasern umfassende Behälter nach Anspruch 1, wobei der Ring (9, 31, 48, 61, 73, 90, 96, 101, 106) eine Breite (b1, b2, b3) von 3 Millimeter bis 12 Millimeter aufweist.

3. Der Fasern umfassende Behälter nach Anspruch 1 oder 2, wobei der Ring (9, 31, 48, 61, 73, 90, 96, 101, 106) eine Dicke von 0,1 Millimeter bis 4 Millimeter aufweist.

4. Der Fasern umfassende Behälter nach einem der Ansprüche 1 bis 3, wobei der Ring (9, 31, 48, 61, 73, 90, 96, 101, 106) ein faserhaltiges Geflecht umfasst.

5. Der Fasern umfassende Behälter nach einem der Ansprüche 1 bis 4, wobei der Ring (9, 31, 48, 61, 73, 90, 96, 101, 106) Karton und/oder eine faserhaltige Schnur, beispielsweise Hanfschnur, umfasst.

6. Der Fasern umfassende Behälter nach einem der Ansprüche 1 bis 5, wobei am Verschlusskörper (14, 33, 47, 60, 72, 89) eine Dichtung (15, 34, 46, 59, 71, 88) angeordnet ist, die in der Verschlussposition zwischen dem Verschlusskörper (14, 33, 47, 60, 72, 89) und der Mündungsöffnung (8, 30, 43, 56, 69, 85, 99, 104, 109, 115, 118, 121, 124, 127, 130, 133, 136, 139) zu liegen kommt, wobei beispielsweise die Dichtung (15, 34, 46, 59, 71, 88) ein biologisch abbaubares Material umfasst, beispielsweise Kautschuk und/oder Polyhydroxyalkanoate, wobei beispielsweise die Dichtung (15, 34, 46, 59, 71, 88) Silikonkautschuk oder Silikon umfasst, wobei beispielsweise die Dichtung (15, 34, 46, 59, 71, 88) fest, aber mechanisch lösbar am Verschlusskörper (14, 33, 47, 60, 72, 89) angeordnet ist.

7. Der Fasern umfassende Behälter nach einem der Ansprüche 1 bis 6, wobei ein erster Verbindungsbereich von jedem Bügel (10, 32, 49, 62, 74, 91) und Ring (9, 31, 48, 61, 73, 90, 96, 101, 106) eine erste Relativbewegung vom Bügel (10, 32, 49, 62, 74, 91) zum Ring (9, 31, 48, 61, 73, 90, 96, 101, 106) zulässt.

8. Der Fasern umfassende Behälter nach einem der Ansprüche 1 bis 7, wobei ein zweiter Verbindungsbereich von jedem Bügel (10, 32, 49, 62) und Verschlusskörper (14, 33, 47, 60) eine zweite Relativbewegung zwischen dem Bügel (10, 32, 49, 62) und dem Verschlusskörper (14, 33, 47, 60) zulässt.

9. Der Fasern umfassende Behälter nach Anspruch 7 oder 8, wobei jeder Bügel (32, 49, 62) starr ausgebildet ist, wobei beispielsweise der erste Verbindungsbereich und/oder der zweite Verbindungsbereich als Splint ausgeführt ist oder eine Bewegungsnut umfasst.

10. Der Fasern umfassende Behälter nach einem der Ansprüche 1 bis 8, wobei jeder Bügel (10) zweiteilig mit einem Gelenk (13) zwischen einem ersten Bügelteil (11) und einem zweiten Bügelteil (12) ausgebildet ist.

11. Der Fasern umfassende Behälter nach Anspruch 10, wobei der Klappverschluss (3) weiter eine bewegungseinschränkende Führung (18) für jeden Bügel (10) umfasst, wobei beispielsweise die Führung (18) am Halsbereich oder an einem Schulterbereich (5) des Fasern umfassenden Behälterkörpers (2) angeordnet ist.

12. Der Fasern umfassende Behälter nach einem der Ansprüche 1 bis 8, wobei jeder der Bügel (74, 91) zusätzlich eine Zugvorrichtung (78, 93) umfasst, die dazu ausgebildet ist, beim Ausüben einer Zugkraft, wenn der Klappverschluss (67, 83) in einer Verschlussposition angeordnet ist, mindestens einen der Bügel (74, 91) vom Verschlusskörper (72, 89) zu trennen, beispielsweise in dem zweiten Verbindungsbereich (76), sodass die Mündungsöffnung (69, 85) freigebbar ist.

13. Der Fasern umfassende Behälter nach einem der Ansprüche 1 bis 12, wobei der Halsbereich (4, 26, 42, 55, 68, 84, 97, 102, 107, 114, 117, 120, 123, 126, 129, 132, 135, 138) mindestens eine Krempe (21, 32, 57, 70, 86, 100, 105, 110, 113, 116, 119, 122, 125, 128, 131, 134, 137) umfasst, wobei beispielsweise eine erste Krempe (21, 32, 57, 70, 86, 100, 105, 110, 113, 116, 119, 122, 125, 128, 131, 134, 137) in einer Verschlussposition des Klappverschlusses (3, 25, 41, 54, 67, 83) zumindest teilweise in Kontakt mit der Dichtung (15, 34, 46, 59, 71, 88) des Verschlusskörpers (14, 33, 47, 60, 72, 89) ist, wobei beispielsweise die erste und/oder eine zweite Krempe als eine Bewegungseinschränkung für den Ring (9, 31, 48, 61, 73, 90, 96, 101, 106) vorgesehen sind.

14. Fasern umfassender Klappverschluss, der an einem Fasern umfassenden Behälterkörper anordenbar ist, wobei der Klappverschluss (3, 25, 41, 54, 67, 83) umfasst:
- einen Ring (9, 31, 48, 61, 73, 90, 96, 101, 106), der ausgebildet ist, einen Halsbereich (4, 26, 42, 55, 68, 84, 97, 102, 107, 114, 117, 120, 123, 126, 129, 132, 135, 138) eines Behälterkörpers umfänglich zu umgeben,
- einen Verschlusskörper (14, 33, 47, 60, 72, 89),
wobei der Ring (9, 31, 48, 61, 73, 90, 96, 101, 106) und der Verschlusskörper (14, 33, 47, 60, 72, 89) mittels zweier Bügel verbunden sind, **dadurch gekennzeichnet, dass** die Fasern natürlichen Ursprungs sind.

15. Der Fasern umfassende Klappverschluss nach Anspruch 14, wobei:
der Ring (9, 31, 48, 61, 73, 90, 96, 101, 106) eine Breite von 3 Millimeter bis 12 Millimeter aufweist, wobei beispielsweise der Ring (9, 31, 48, 61, 73, 90, 96, 101, 106) eine Dicke von 0,1 Millimeter bis 4 Millimeter aufweist,
wobei beispielsweise der Ring (9, 31, 48, 61, 73, 90, 96, 101, 106) ein faserhaltiges Geflecht umfasst,
wobei der Ring (9, 31, 48, 61, 73, 90, 96, 101, 106) beispielsweise Karton und/oder eine faserhaltige Schnur, beispielsweise Hanfschnur, umfasst, wobei der Ring (9, 31, 48, 61, 73, 90, 96, 101, 106) beispielsweise ein biologisch abbaubares und/oder recyclebares Material umfasst,
wobei beispielsweise am Verschlusskörper (14, 33, 47, 60, 72, 89) eine Dichtung (15, 34, 46, 59, 71, 88) angeordnet ist, wobei beispielsweise die Dichtung (15, 34, 46, 59, 71, 88) ein biologisch abbaubares Material umfasst, beispielsweise Kautschuk und/oder Polyhydroxyalkanoate, wobei beispielsweise die Dichtung (15, 34, 46, 59, 71, 88) Silikonkautschuk oder Silikon umfasst, wobei beispielsweise die Dichtung (15, 34, 46, 59, 71, 88) fest, aber mechanisch lösbar am Verschlusskörper (14, 33, 47, 60, 72, 89) angeordnet ist.,
wobei beispielsweise ein erster Verbindungsbereich von jedem Bügel
und Ring (9, 31, 48, 61, 73, 90, 96, 101, 106) eine erste Relativbewegung vom Bügel zum Ring (9, 31, 48, 61, 73, 90, 96, 101, 106) zulässt,
wobei beispielsweise ein zweiter Verbindungsbereich von jedem Bügel
und Verschlusskörper (14, 33, 47, 60, 72, 89) eine zweite Relativbewegung zwischen dem Bügel und dem Verschlusskörper (14, 33, 47, 60, 72, 89) zulässt,
wobei beispielsweise der Klappverschluss (3) weiter eine bewegungseinschränkende Führung (18) für jeden Bügel (10) umfasst, wobei beispielsweise die Führung (18) am Halsbereich oder an einem Schulterbereich des Fasern umfassenden Behälterkörpers angeordenbar ist.

16. Der Fasern umfassende Klappverschluss nach Anspruch 15, wobei jeder Bügel (32, 49, 62) starr ausgebildet ist, wobei beispielsweise der erste Verbindungsbereich und/oder der zweite Verbindungsbereich als Splint ausgeführt ist oder eine Bewegungsnut umfasst.

17. Der Fasern umfassende Klappverschluss Anspruch 14 oder 15, wobei jeder Bügel (10) zweiteilig mit einem Gelenk (13) zwischen einem ersten Bügelteil (11) und einem zweiten Bügelteil (12) ausgebildet ist.

## Claims

1. Container (1, 23, 39, 52, 65, 81) comprising fibres, comprising a container body comprising fibres,
**characterised by**
a hinged closure (3, 25, 41, 54, 67, 83) comprising fibres arranged on the container body (2, 24, 40, 53, 66, 82, 98, 103, 108),
wherein the container body comprises a neck region (4, 26, 42, 55, 68, 84, 97, 102, 107, 114, 117, 120, 123, 126, 129, 132, 135, 138) and a mouth opening (8, 30, 43, 56, 69, 85, 99, 104, 109, 115, 118, 121, 124, 127, 130, 133, 136, 139),
wherein the hinged closure comprises a ring (9, 31, 48, 61, 73, 90, 96, 101, 106) circumferentially surrounding the neck region (4, 26, 42, 55, 68, 84, 97, 102, 107, 114, 117, 120, 123, 126, 129, 132, 135, 138) and a closure body (14, 33, 47, 60, 72, 89) that is designed, in a closed position of the hinged closure (3, 25, 41, 54, 67, 83), to close the mouth opening (8, 30, 43, 56, 69, 85, 99, 104, 109, 115, 118, 121, 124, 127, 130, 133, 136, 139), wherein the ring and the closure body are connected by two brackets (10, 32, 49, 62, 74, 91),
wherein the fibres are of natural origin.

2. The container comprising fibres according to claim 1, wherein the ring (9, 31, 48, 61, 73, 90, 96, 101, 106) has a width (b1, b2, b3) of 3 millimetres to 12 millimetres.

3. The container comprising fibres according to claim 1 or 2, wherein the ring (9, 31, 48, 61, 73, 90, 96, 101, 106) has a thickness of 0.1 millimetres to 4 millimetres.

4. The container comprising fibres according to one of claims 1 to 3, wherein the ring (9, 31, 48, 61, 73, 90, 96, 101, 106) comprises a fibre-containing braid.

5. The container comprising fibres according to one of claims 1 to 4, wherein the ring (9, 31, 48, 61, 73, 90, 96, 101, 106) comprises cardboard and/or a fibre-containing cord, for example, hemp cord.

6. The container comprising fibres according to one of claims 1 to 5, wherein a seal (15, 34, 46, 59, 71, 88) is arranged on the closure body (14, 33, 47, 60, 72, 89), that comes to lie in the closed position between the closure body (14, 33, 47, 60, 72, 89) and the mouth opening (8, 30, 43, 56, 69, 85, 99, 104, 109, 115, 118, 121, 124, 127, 130, 133, 136, 139), wherein, for example, the seal (15, 34, 46, 59, 71, 88) comprises a biodegradable material, for example, rubber and/or polyhydroxyalkanoates, wherein, for example, the seal (15, 34, 46, 59, 71, 88) comprises silicone rubber or silicone, wherein, for example, the seal (15, 34, 46, 59, 71, 88) is arranged so as to be fixed, but mechanically releasable, on the closure body (14, 33, 47, 60, 72, 89).

7. The container comprising fibres according to one of claims 1 to 6, wherein a first connecting region of each bracket (10, 32, 49, 62, 74, 91) and ring (9, 31, 48, 61, 73, 90, 96, 101, 106) allows a first relative movement from the bracket (10, 32, 49, 62, 74, 91) to the ring (9, 31, 48, 61, 73, 90, 96, 101, 106).

8. The container comprising fibres according to one of claims 1 to 7, wherein a second connecting region of each bracket (10, 32, 49, 62) and closure body (14, 33, 47, 60) allows a second relative movement between the bracket (10, 32, 49, 62) and the closure body (14, 33, 47, 60).

9. The container comprising fibres according to claim 7 or 8, wherein each bracket (32, 49, 62) is rigid, wherein, for example, the first connecting region and/or the second connecting region is designed as a cotter pin or comprises a movement groove.

10. The container comprising fibres according to one of claims 1 to 8, wherein each bracket (10) is formed in two parts with a joint (13) between a first bracket part (11) and a second bracket part (12).

11. The container comprising fibres according to claim 10, wherein the hinged closure (3) further comprises a movement-limiting guide (18) for each bracket (10), wherein, for example, the guide (18) is arranged on the neck region or on a shoulder region (5) of the container body (2) comprising fibres.

12. The container comprising fibres according to one of claims 1 to 8, wherein each of the brackets (74, 91) additionally comprises a pulling device (78, 93) designed to disconnect at least one of the brackets (74, 91) from the closure body (72, 89) when a pulling force is exerted when the hinged closure (67, 83) is arranged in a closed position, for example, in the second connecting region (76), so that the mouth opening (69, 85) is releasable.

13. The container comprising fibres according to one of claims 1 to 12, wherein the neck region (4, 26, 42, 55, 68, 84, 97, 102, 107, 114, 117, 120, 123, 126, 129, 132, 135, 138) comprises at least one rim (21, 32, 57, 70, 86, 100, 105, 110, 113, 116, 119, 122, 125, 128, 131, 134, 137), wherein, for example, a first rim (21, 32, 57, 70, 86, 100, 105, 110, 113, 116, 119, 122, 125, 128, 131, 134, 137) in a closed position of the hinged closure (3, 25, 41, 54, 67, 83) is at least partially in contact with the seal (15, 34, 46, 59, 71, 88) of the closure body (14, 33, 47, 60, 72, 89), wherein, for example, the first and/or a second rim are provided as a movement limitation for the ring (9, 31, 48, 61, 73, 90, 96, 101, 106).

14. Hinged closure, comprising fibres, that is arrangable on a container body comprising fibres, wherein the hinged closure (3, 25, 41, 54, 67, 83) comprises:
- a ring (9, 31, 48, 61, 73, 90, 96, 101, 106), which is designed to circumferentially surround a neck region (4, 26, 42, 55, 68, 84, 97, 102, 107, 114, 117, 120, 123, 126, 129, 132, 135, 138) of a container body,
- a closure body (14, 33, 47, 60, 72, 89),
wherein the ring (9, 31, 48, 61, 73, 90, 96, 101, 106) and the closure body (14, 33, 47, 60, 72, 89) are connected by two brackets,
**characterised in that**
the fibres are of natural origin.

15. The hinged closure comprising fibres according to claim 14, wherein:
the ring (9, 31, 48, 61, 73, 90, 96, 101, 106) has a width of 3 millimetres to 12 millimetres,
wherein, for example, the ring (9, 31, 48, 61, 73, 90, 96, 101, 106) has a thickness of 0.1 millimetres to 4 millimetres,
wherein, for example, the ring (9, 31, 48, 61, 73, 90, 96, 101, 106) comprises a fibre-containing braid,
wherein the ring (9, 31, 48, 61, 73, 90, 96, 101, 106) comprises, for example, cardboard and/or a fibre-containing cord, for example, hemp cord, wherein the ring (9, 31, 48, 61, 73, 90, 96, 101, 106) comprises, for example, a biodegradable and/or recyclable material,
wherein, for example, a seal (15, 34, 46, 59, 71, 88) is arranged on the closure body (14, 33, 47, 60, 72, 89), wherein, for example, the seal (15, 34, 46, 59, 71, 88) comprises a biodegradable material, for example, rubber and/or polyhydroxyalkanoates, wherein, for example, the seal (15, 34, 46, 59, 71, 88) comprises silicone rubber or silicone, wherein, for example, the seal (15, 34, 46, 59, 71, 88) is arranged so as to be fixed, but mechanically releasable, on the closure body (14, 33, 47, 60, 72, 89),
wherein, for example, a first connecting region of each bracket and ring (9, 31, 48, 61, 73, 90, 96, 101, 106) allows a first relative movement from the bracket to the ring (9, 31, 48, 61, 73, 90, 96, 101, 106),
wherein, for example, a second connecting region of each bracket and closure body (14, 33, 47, 60, 72, 89) allows a second relative movement between the bracket and the closure body (14, 33, 47, 60, 72, 89),
wherein, for example, the hinged closure (3) further comprises a movement-limiting guide (18) for each bracket (10), wherein, for example, the guide (18) is arrangable on the neck region or on a shoulder region of the container body comprising fibres.

16. Hinged closure comprising fibres according to claim 15, wherein each bracket (32, 49, 62) is rigid, wherein, for example, the first connecting region and/or the second connecting region is designed as a cotter pin or comprises a movement groove.

17. The hinged closure comprising fibres claim 14 or 15, wherein each bracket (10) is formed in two parts with a joint (13) between a first bracket (11) and a second bracket part (12).

## Revendications

1. Récipient comportant des fibres (1, 23, 39, 52, 65, 81) et comprenant un corps de récipient comportant des fibres,
**caractérisé par**
une fermeture rabattable (3, 25, 41, 54, 67, 83) comportant des fibres agencée sur le corps de récipient (2, 24, 40, 53, 66, 82, 98, 103, 108),
dans lequel le corps de récipient comprend une zone de col (4, 26, 42, 55, 68, 84, 97, 102, 107, 114, 117, 120, 123, 126, 129, 132, 135, 138) et une embouchure (8, 30, 43, 56, 69, 85, 99, 104, 109, 115, 118, 121, 124, 127, 130, 133, 136, 139),
dans lequel la fermeture rabattable comprend une bague (9, 31, 48, 61, 73, 90, 96, 101, 106) entourant circonférentiellement la zone de col (4, 26, 42, 55, 68, 84, 97, 102, 107, 114, 117, 120, 123, 126, 129, 132, 135, 138) et un corps de fermeture (14, 33, 47, 60, 72, 89) qui, en position fermée de la fermeture rabattable (3, 25, 41, 54, 67, 83), est conçu pour fermer l'embouchure (8, 30, 43, 56, 69, 85, 99, 104, 109, 115, 118, 121, 124, 127, 130, 133, 136, 139), dans lequel la bague et le corps de fermeture sont reliés au moyen de deux étriers (10, 32, 49, 62, 74, 91), dans lequel les fibres sont d'origine naturelle.

2. Récipient comportant des fibres selon la revendication 1, dans lequel la bague (9, 31, 48, 61, 73, 90, 96, 101, 106) présente une largeur (b1, b2, b3) de 3 à 12 millimètres.

3. Récipient comportant des fibres selon la revendication 1 ou 2, dans lequel la bague (9, 31, 48, 61, 73, 90, 96, 101, 106) présente une épaisseur de 0,1 à 4 millimètres.

4. Récipient comportant des fibres selon l'une des revendications 1 à 3, dans lequel la bague (9, 31, 48, 61, 73, 90, 96, 101, 106) comprend une tresse comportant des fibres.

5. Récipient comportant des fibres selon l'une des revendications 1 à 4, dans lequel la bague (9, 31, 48, 61, 73, 90, 96, 101, 106) comprend du carton et/ou un cordon comportant des fibres, par exemple un cordon de chanvre.

6. Récipient comportant des fibres selon l'une des revendications 1 à 5, dans lequel un joint (15, 34, 46, 59, 71, 88) est agencé sur le corps de fermeture (14, 33, 47, 60, 72, 89), qui, en position fermée, vient à se trouver entre le corps de fermeture (14, 33, 47, 60, 72, 89) et l'embouchure (8, 30, 43, 56, 69, 85, 99, 104, 109, 115, 118, 121, 124, 127, 130, 133, 136, 139), dans lequel le joint (15, 34, 46, 59, 71, 88) comprend par exemple un matériau biodégradable, par exemple du caoutchouc et/ou des polyhydroxyalcanoates, dans lequel le joint (15, 34, 46, 59, 71, 88) comprend par exemple du caoutchouc de silicone ou du silicone, dans lequel le joint (15, 34, 46, 59, 71, 88) est par exemple agencé de manière fixe mais mécaniquement détachable sur le corps de fermeture (14, 33, 47, 60, 72, 89).

7. Récipient comportant des fibres selon l'une des revendications 1 à 6, dans lequel une première zone de connexion entre chaque étrier (10, 32, 49, 62, 74, 91) et la bague (9, 31, 48, 61, 73, 90, 96, 101, 106) permet un premier déplacement relatif de l'étrier (10, 32, 49, 62, 74, 91) par rapport à la bague (9, 31, 48, 61, 73, 90, 96, 101, 106).

8. Récipient comportant des fibres selon l'une des revendications 1 à 7, dans lequel une deuxième zone de connexion entre chaque étrier (10, 32, 49, 62) et le corps de fermeture (14, 33, 47, 60) permet un deuxième déplacement relatif entre l'étrier (10, 32, 49, 62) et le corps de fermeture (14, 33, 47, 60).

9. Récipient comportant des fibres selon la revendication 7 ou 8, dans lequel chaque étrier (32, 49, 62) est constitué de manière rigide, dans lequel la première zone de connexion et/ou la deuxième zone de connexion est par exemple conçue comme une goupille ou comprend une rainure de déplacement.

10. Récipient comportant des fibres selon l'une des revendications 1 à 8, dans lequel chaque étrier (10) est constitué en deux parties avec une articulation (13) entre une première partie d'étrier (11) et une deuxième partie d'étrier (12).

11. Récipient comportant des fibres selon la revendication 10, dans lequel la fermeture rabattable (3) comprend en outre un guide de restriction de déplacement (18) pour chaque étrier (10), dans lequel le guide (18) est par exemple agencé dans la zone de col ou dans une zone d'épaulement (5) du corps de récipient comportant des fibres (2).

12. Récipient comportant des fibres selon l'une des revendications 1 à 8, dans lequel chacun des étriers (74, 91) comprend en outre un dispositif de traction (78, 93) conçu pour séparer au moins l'un des étriers (74, 91) du corps de fermeture (72, 89) quand une force de traction est appliquée alors que la fermeture rabattable (67, 83) est en position fermée, par exemple dans la deuxième zone de connexion (76), afin que l'embouchure (69, 85) puisse être libérée.

13. Récipient comportant des fibres selon l'une des revendications 1 à 12, dans lequel la zone de col (4, 26, 42, 55, 68, 84, 97, 102, 107, 114, 117, 120, 123, 126, 129, 132, 135, 138) comprend au moins un bord (21, 32, 57, 70, 86, 100, 105, 110, 113, 116, 119, 122, 125, 128, 131, 134, 137), dans lequel un premier bord (21, 32, 57, 70, 86, 100, 105, 110, 113, 116, 119, 122, 125, 128, 131, 134, 137) en position fermée de la fermeture rabattable (3, 25, 41, 54, 67, 83) est par exemple au moins partiellement en contact avec le joint (15, 34, 46, 59, 71, 88) du corps de fermeture (14, 33, 47, 60, 72, 89), dans lequel le premier bord et/ou un deuxième bord est par exemple pourvu comme butée de déplacement pour la bague (9, 31, 48, 61, 73, 90, 96, 101, 106).

14. Fermeture rabattable comportant des fibres et pouvant être agencée sur un corps de récipient comportant des fibres, dans laquelle la fermeture rabattable (3, 25, 41, 54, 67, 83) comprend :
- une bague (9, 31, 48, 61, 73, 90, 96, 101, 106) conçue pour entourer circonférentiellement une zone de col (4, 26, 42, 55, 68, 84, 97, 102, 107, 114, 117, 120, 123, 126, 129, 132, 135, 138) d'un corps de récipient,
- un corps de fermeture (14, 33, 47, 60, 72, 89),
dans laquelle la bague (9, 31, 48, 61, 73, 90, 96, 101, 106) et le corps de fermeture (14, 33, 47, 60, 72, 89) sont reliés au moyen de deux étriers,
**caractérisée en ce que** les fibres sont d'origine naturelle.

15. Fermeture rabattable comportant des fibres selon la revendication 14, dans laquelle :
la bague (9, 31, 48, 61, 73, 90, 96, 101, 106) présente une largeur de 3 à 12 millimètres, dans laquelle la bague (9, 31, 48, 61, 73, 90, 96, 101, 106) présente par exemple une épaisseur de 0,1 à 4 millimètres,
la bague (9, 31, 48, 61, 73, 90, 96, 101, 106) comprend par exemple une tresse comportant des fibres,
la bague (9, 31, 48, 61, 73, 90, 96, 101, 106) comprend par exemple du carton et/ou un cordon comportant des fibres, par exemple un cordon de chanvre, dans laquelle la bague (9, 31, 48, 61, 73, 90, 96, 101, 106) comprend par exemple un matériau biodégradable et/ou recyclable,
un joint (15, 34, 46, 59, 71, 88) est par exemple agencé sur le corps de fermeture (14, 33, 47, 60, 72, 89), dans laquelle le joint (15, 34, 46, 59, 71, 88) comprend par exemple un matériau biodégradable, par exemple du caoutchouc et/ou des polyhydroxyalcanoates, dans laquelle le joint (15, 34, 46, 59, 71, 88) comprend par exemple du caoutchouc de silicone ou du silicone, dans laquelle le joint (15, 34, 46, 59, 71, 88) est par exemple agencé de manière fixe mais mécaniquement détachable sur le corps de fermeture (14, 33, 47, 60, 72, 89),
une première zone de connexion entre chaque étrier et la bague (9, 31, 48, 61, 73, 90, 96, 101, 106) permet par exemple un premier déplacement relatif de l'étrier par rapport à la bague (9, 31, 48, 61, 73, 90, 96, 101, 106),
une deuxième zone de connexion entre chaque étrier et le corps de fermeture (14, 33, 47, 60, 72, 89) permet par exemple un deuxième déplacement relatif entre l'étrier et le corps de fermeture (14, 33, 47, 60, 72, 89),
la fermeture rabattable (3) comprend en outre par exemple un guide de restriction de déplacement (18) pour chaque étrier (10), dans laquelle le guide (18) peut par exemple être agencé dans la zone de col ou dans une zone d'épaulement du corps du récipient comportant des fibres.

16. Fermeture rabattable comportant des fibres selon la revendication 15, dans laquelle chaque étrier (32, 49, 62) est constitué de manière rigide, dans laquelle la première zone de connexion et/ou la deuxième zone de connexion est par exemple conçue comme une goupille ou comprend une rainure de déplacement.

17. Fermeture rabattable comportant des fibres selon la revendication 14 ou 15, dans laquelle chaque étrier (10) est constitué en deux parties avec une articulation (13) entre une première partie d'étrier (11) et une deuxième partie d'étrier (12).
